# EUROPEAN PATENT SPECIFICATION

(11) **EP 4 204 247 B1**
(45) Date of publication and mention of the grant of the patent: **23.10.2024**
(21) Application number: 21759420.9
(22) Date of filing: 25.08.2021
(51) Int. Cl.: B60K 26/02, G05G 1/30

(54) **FOOT OPERABLE ASSEMBLY**
FUSSBETÄTIGBARE ANORDNUNG
ENSEMBLE ACTIONNABLE AU PIED

(30) Priority: 26.08.2020 NL 2026343
(43) Date of publication of application: 05.07.2023
(73) Proprietor: Future Cleaning Technologies B.V., 5626 DD Eindhoven (NL)
(72) Inventor: VAN DE VEN, Frank Peter William, 5626 DD Eindhoven (NL); GRÜNKE, Holger, 5626 DD Eindhoven (NL)
(74) Representative: V.O.
(86) International application number: PCT/NL2021/050521
(87) International publication number: WO 2022/045886

(56) References cited:
- US-A1- 2011 041 645
- US-A1- 2018 050 671
- US-B2- 7 185 555

## Description

### TECHNICAL FIELD AND BACKGROUND

The present invention relates to a foot operable assembly, a vehicle comprising the assembly, and a method of operating the assembly or vehicle.

Foot operable assemblies typically include a pedal that is either operated by an entire foot or by a part of the foot. Foot pedals that are operated by the entire foot can be relatively large which makes them easy to operate but also bulky. For example, use of such a large pedal may limit available space in a vehicle and hinder a user boarding the vehicle. Front foot pedals are typically operated by a ball or front of the foot. Such pedals can be more compact but also more difficult to operate and/or cause fatigue. As background, US 2018/0050671 A1 describes a sliding-type heel pad with height adjustment function.

There is a need for further improvement with regards to foot operable assemblies that alleviate these or other problems.

### SUMMARY

The scope of this invention is defined by the independent claims. Some aspects of the present invention relate to a foot operable assembly comprising a front foot pedal. By mounting a heel support behind the pedal, the foot can be supported while operating the pedal. However, the inventors find that during operation of a front foot pedal, the user may need to move the heel depending on a position of the pedal. This can lead to fatigue. By allowing the heel support to translate, e.g. slide, while operating the pedal the changing position of the heel can be accommodated, while maintaining support. For example, the pedal and heel support can be mounted on a platform. By disposing the heel support on a horizontal back section of the platform, and the pedal on a declining front section, this may ensure the pedal can be pressed down further at a minimum height above the heel support. The inventors find that this can provide a more ergonomic posture for the foot and thus further alleviating fatigue. By providing a translation mechanism between the heel support and the platform, the heel support can translate, e.g. slide, along a longitudinal direction between a forward position and a backward position relative to the foot pedal, while the foot pedal is pressed along the downward direction. The inventors find that this can provide improve control while using minimum effort, thus further alleviating fatigue. By appropriately sizing and spacing apart the pedal and heel support, as described herein, various shoe sizes can be optimally supported while simultaneously providing grip and control over the assembly. By having a foot pedal operable in a downward direction substantially perpendicular to a longitudinal direction of the translatable heel support and/or having a foot pedal mounted on a push shaft tilted at an angle toward the heel support, the top surface of the foot pedal can be perpendicular to a sole of a shoe, when the foot pedal is e.g. in fully extended or pressed down position. This may further optimize control over the foot pedal while still alleviating fatigue. By providing the foot pedal with a convex, e.g. cylindrical, top surface, while the heel support is flat, the front and the back of the foot can be kept stationary to the respective top surfaces while allowing the user to roll off a bottom of their shoe along the top surface during operation of the assembly. For example, the pedal and heel support can be provided with anti-slip measures to maintain both grip and flexibility. An optional sensor can be used to monitor translation of the heel support for various purposes. For example, the sensor output can be used to distinguish between an unintended operation, e.g. malfunction or slip, and an intended operation, e.g. normal operating conditions. Typically, the foot pedal is preloaded in an upward direction, e.g. using a biasing element. Alternatively, or in addition, the heel support can also be preloaded, e.g. in a neutral or forward position. By providing the biasing element of the heel support with a relatively low resilience, e.g. less than that of the pedal, the user is minimally hindered during operation of the assembly, while still providing restoration of the support position.

Other or further aspects of the present invention relate to a vehicle, such as a ride-on cleaning machine comprising the foot operable assembly described herein. Typically, the vehicle comprises a seat for seating a driver of the vehicle and a steering column in front of the seat for allowing the seated driver to steer the vehicle. Preferably, the seat and steering column are separated by a path there between for the driver to board the vehicle. By arranging the front pedal laterally adjacent the steering column, clear of the path, and configuring the front pedal for the seated driver to operate the vehicle by a front of their foot, while the translatable heel support is arranged in the path for boarding the vehicle, longitudinally behind the pedal for supporting a back of the driver's foot, a compact vehicle is obtained which can be boarded by the user without a risk of tripping or damaging the foot operable assembly

Aspects of the present invention can also be embodied as a use or method of operating the assembly or vehicle as described herein. For example, the foot pedal is pressed with a front of a foot while a heel of the foot is supported by the heel support translating backward or forward. Accordingly, the assembly or vehicle can be safe and easy to use, while minimizing fatigue when used over extended periods of time.

### BRIEF DESCRIPTION OF DRAWINGS

These and other features, aspects, and advantages of the apparatus, systems and methods of the present invention will become better understood from the following description, appended claims, and accompanying drawing wherein:
FIG 1A and 1B illustrate side views of a foot operable assembly, in extended and pressed down positions, respectively;
FIG 2 illustrates further features of a foot operable assembly;
FIG 3 illustrates a top view of the assembly;
FIG 4 illustrates a detailed view of a slide mechanism;
FIG 5 illustrates a section view of the slide mechanism;
FIG 6A and 6B illustrate a vehicle comprising the foot operable assembly;

### DESCRIPTION OF EMBODIMENTS

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

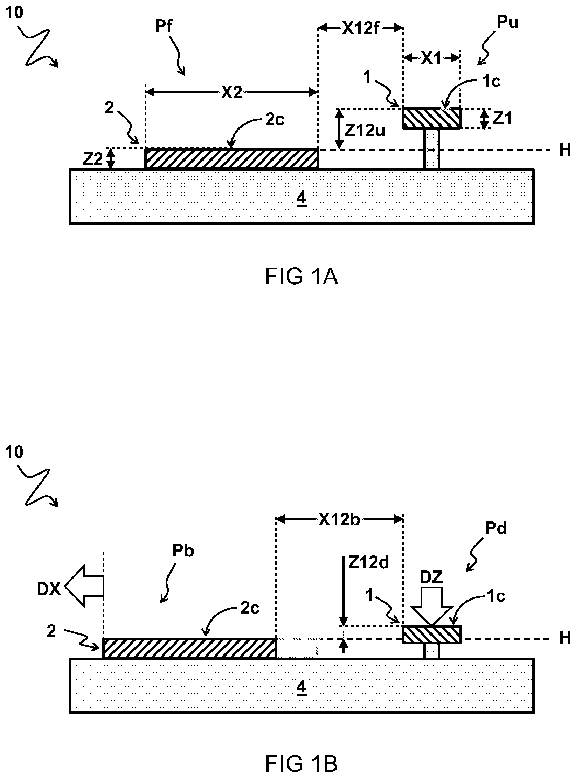

FIG 1A and 1B illustrate a side view of a foot operable assembly 10, in extended and pressed down positions, respectively. In a preferred embodiment, the foot operable assembly 10 comprises a depressible front foot pedal 1 and a translatable heel support 2. Typically, the heel support 2 is mounted (longitudinally) behind the front foot pedal 1. In one embodiment, e.g. as shown, the foot pedal 1 and the heel support 2 are mounted on a platform 4. For example, the platform can be a separate or integrated part of a structural frame of a vehicle, machine, or (industrial or household) appliance.

In some embodiments, e.g. as shown, a top surface 2c of the heel support 2 spans a horizontal plane H. In a preferred embodiment, a top surface 1c of the foot pedal 1 extends minimally above the horizontal plane H, e.g. with a height Z12d less than two centimeters in (fully) pressed down position Pd of the foot pedal 1, preferably less than one or even less than half a centimeter, e.g. zero, i.e. substantially flush with the horizontal plane H and/or top surface 2c of the heel support 2. In another or further preferred embodiment, a top surface 1c of the foot pedal 1 also does not extend too high above the horizontal plane, e.g. with a height Z12u less than five centimeters in fully upward (unpressed, extended) position Pu of the foot pedal 1, preferably, less than four centimeters, e.g. between two and three centimeters. Most preferably, the top surface 2c of the heel support 2 is itself also at a relatively low height Z2 above the surrounding platform 4, e.g. wherein the height Z2 is less than one centimeter, less than half a centimeter, or substantially flush with the platform. In this way, the user is less likely to trip over the heel support, e.g. when boarding a vehicle with the assembly.

In some embodiments, the heel support 2 is translatable along a longitudinal direction DX between a forward position Pf and a backward position Pb relative to the foot pedal 1. In a preferred embodiment, the heel support 2 is arranged for translating from the forward position Pf to the backward position Pb as the foot pedal 1 is pressed from the fully upward position Pu to the pressed down position Pd. In another or further embodiment, the heel support 2 is arranged for translating in an opposite (forward) direction, depending on an angle of the foot pedal 1.

In some embodiments, in the forward position Pf, a (longitudinal) distance X12f between the foot pedal 1 and the heel support 2 is less than twenty centimeters, e.g. between five and fifteen centimeters, or between five and ten centimeters. Accordingly, the distance X12f between the foot pedal 1 and the heel support 2 in the forward position Pf of the heel support 2, may be suitable for various shoe sizes, simultaneously placing the ball of the foot on the foot pedal 1 and the heel of the foot on the heel support 2. The horizontal distance X12f can for instance be measured as the shortest (Euclidean) distance, or the projected distance in the longitudinal direction between two opposing edges of the heel support 2 and the foot pedal 1.

In some embodiments, the heel support 2 is translatable over a distance X12b - X12f between the forward position Pf and the backward position Pb of at least one centimeter, e.g. between two and three centimeters, up to five centimeters, or more. For example, this may ensure sufficient range of translation of the heel support 2 relative to the foot pedal 1 while operating the foot operable assembly 10.

In some embodiments, the foot pedal 1 has a length X1 (along the longitudinal direction) of at least three centimeters. For example, a longer foot pedal 1 can provide a higher level of grip between the sole of the shoe and the top surface 1c of the foot pedal 1. In other or further embodiments, the foot pedal 1 has a length X1 (along the longitudinal direction) less than ten centimeters. For example, this may alleviate over-constraining the front of the shoe, such that the shoe cannot properly simultaneously contact the foot pedal 1 and the heel support 2. Also, this may prevent bulkiness of the foot pedal 1. A shorter foot pedal 1 can provide a better defined contact between the shoe, the foot pedal 1 and the heel support 2, and can reduce the bulkiness. The pedal length X1 may be further defined based on usability aspects (e.g. foot support, ergonomics, ease of use). Accordingly, the length X1 of the foot pedal 1 is preferably between three and ten centimeters, or between five and eight centimeters.

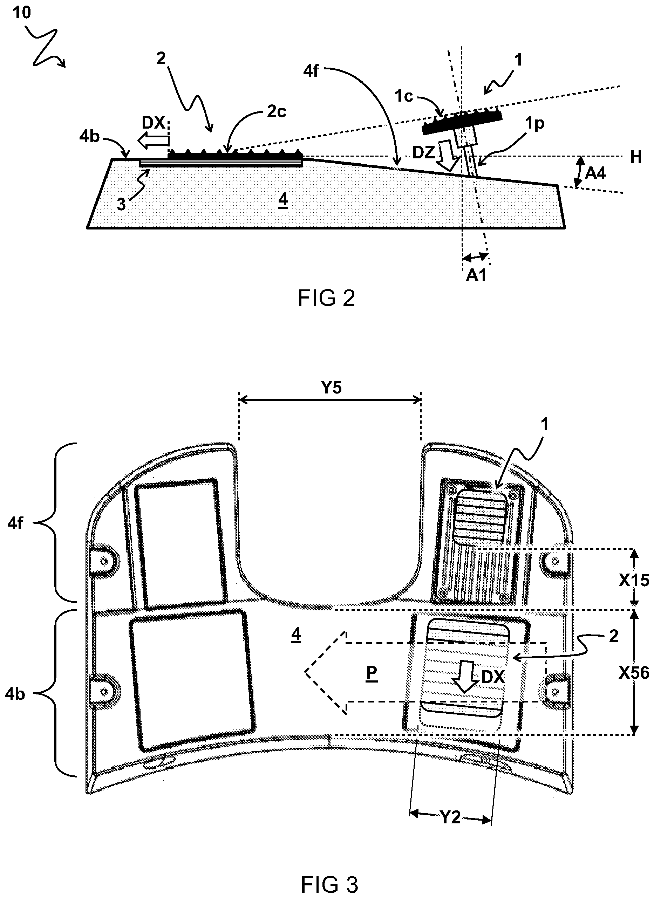

In some embodiments, the heel support 2 has a length X2 (along the longitudinal direction) of at least five centimeters. For example, this may ensure that a heel of a shoe can entirely be placed on the heel support 2. A longer heel support 2 can provide more room for placing the heel of a shoe. In other or further embodiments, the heel support 2 has a length X2 (along the longitudinal direction) less than twenty centimeters. For example, this may provide a relatively compact design. A shorter heel support can reduce the overall length of the assembly 10. Accordingly, the length X2 of the heel support 2 is preferably between six and sixteen centimeters, or between eight and twelve centimeters. Alternatively, or in addition, to properly accommodate a heel of the foot, the heel support 2 preferably has a width in the lateral direction of at least five centimeters, preferably, more than six centimeters, e.g. between eight and ten centimeters, or up to twelve centimeters (e.g. Y2 indicated in FIG 3).

In some embodiments, the foot pedal 1 comprises a pedal biasing element (not shown), arranged for preloading the foot pedal 1 in an upward direction (fully extended). The pedal biasing element may e.g. comprise coil springs, leaf springs, wire springs, torsion springs, hydraulic or pneumatic springs, elastic hinges or flexure elements, Belleville washers, intrinsic flexibility of structural components, or other biasing means deemed suitable by a person skilled in the art. In one embodiment, the pedal biasing element provides a preload stiffness of less than one thousand Newton per meter (N/m) to the foot pedal 1, e.g. between two hundred and nine hundred Newton per meter, between four hundred and eight hundred Newton per meter, or between six hundred and eight hundred Newton per meter.

FIG 2 illustrates further features of a foot operable assembly 10. In some embodiments, e.g. as shown, the platform 4 comprises a front section with a top surface 4f arranged for mounting the foot pedal 1, and a back section with a top surface 4b arranged for mounting the heel support 2. In a preferred embodiment, the top surface 4f of the front section has a declining slope, at least in a forward direction, relative to the top surface 4b of the back section. For example, the heel support 2 is configured to translate (move) in a horizontal plane H along the top surface 4b of the back section, while the foot pedal 1 is pushed down into a forwardly sloped top surface 4f of the front section. By providing the pedal on the declining slope, the foot pedal 1 can be pressed down further into the platform 4, compared to a platform 4 having a non-declining top surface 4f of a front section. This may especially be beneficial when the top surface 1c of the foot pedal 1 comprises a significant thickness Z1, e.g. between one and three centimeter; or the movement of the pedal is otherwise limited by a construction element below the pedal, that would otherwise limit the minimum height Z12d of the top surface 1c of the foot pedal 1 above the horizontal plane H in fully pressed down position Pd. For example, the top surface 4f of the front section is at a decline angle A4 of at least ten degrees relative to a horizontal plane H along the top surface 4b of the back section, e.g. between ten and twenty degrees, up to thirty degrees, or more.

In some embodiments, the heel support 2 is arranged for supporting a heel of the foot, while translating along the longitudinal direction DX. In other or further embodiments, the foot pedal 1 is arranged for being pressed down along a downward direction DZ by a front of a foot to operate the assembly 10. Preferably, the downward direction DZ of the foot pedal 1 is substantially perpendicular to the longitudinal direction DX of the heel support 2, at least within fifteen degrees (plane angle).

In some embodiments, e.g. as shown, a push shaft 1p of the foot pedal 1 is tilted towards the heel support 2. For example, a centerline of the push shaft 1p is perpendicular to a sole of a shoe, when the foot pedal 1 is in fully extended position. This may provide optimal control over the foot pedal 1 to a user. For example, the angle between the downward direction DZ and the longitudinal direction DX may be less than eighty five degrees. The push shaft 1p can, e.g., be a straight shaft mounted at a certain tilt angle A1 to the horizontal plane H. In other or further embodiments, the top surface 1c of the foot pedal 1 may be tilted.

In some embodiments, the top surface 1c of the foot pedal 1 is substantially convex, e.g. with a radius of curvature smaller than one meter (m). For example, the top surface 1c of the foot pedal 1 can have a radius of curvature of at least two centimeters, preferably between five and fifty centimeters, more preferably between twenty and fifty centimeters. In some embodiments, the radius of curvature may be cylindrical with a centerline oriented in lateral direction. For example, this can allow a user to roll off a bottom of a shoe along the top surface 1c of the foot pedal 1 while pressing down the foot pedal 1, thereby avoiding slip between the bottom of the shoe and the top surface 1c of the foot pedal 1, and thus improving control of the foot operable assembly 10. Alternatively, the top surface 1c of the foot pedal 1 can be spherical, or be curved in more than one direction, with different radii of curvature in different directions. This may allow a user to maintain a good grip between a shoe and the top surface 1c of the foot pedal 1, when the shoe is tilted sideways.

In some embodiments, the top surface 1c of the foot pedal 1 comprises an anti-slip profile. The top surface 1c of the foot pedal 1 and the top surface 2c of the heel support 2 may comprise mechanical anti-slip measures and/or a material with a static coefficient of friction against rubber higher than one. The mechanical anti-slip measures may for instance comprise a grooved surface or a pattern of studs, spikes or pockets. The grooved surface may have a linear pattern with a minimum groove depth and spacing, e.g. a groove depth of three millimeters and a groove spacing of eight millimeters. Other groove patterns, depths and spacings may be used instead.

In some embodiments, the top surface 2c of the heel support 2 is substantially flat. For example, a flat top surface 2c may allow the user to steadily place a heel of a foot on the heel support 2 while operating the foot operable assembly 10. In another or further embodiment, the top surface 2c may be substantially convex, e.g. cylindrical or spherical.

In a preferred embodiment, the assembly comprises a slide or other translation mechanism 3, e.g. mounted between the heel support 2 and the platform 4. For example, the translation mechanism 3 is arranged for translating the heel support 2 (exclusively) along the longitudinal direction DX, while the foot pedal 1 is pressed along the downward direction DZ. Advantageously, the translation mechanism 3 allows a distance between contact positions of the user's foot on the pedal 1 and heel support 2 to remain constant, by allowing translation of the heel support 2 away from (or towards) the foot pedal 1 while the user is operating the foot operable assembly 10.

The translation mechanism 3 is preferably designed to exclusively allow translation in one direction. For example, for withstanding loads of at least ten kilograms or more in all other directions. For example, a sideways force may occur on the translation mechanism 3 when a user steps off or on the heel support 2, to or from a side of the foot operable assembly 10. In some embodiments, the translation mechanism 3 is designed to withstand these loads, e.g. to avoid movement in lateral directions which could potentially cause unsafe situations or loss of performance of the foot operable assembly 10. For example, in one embodiment the translation mechanism 3 comprises two components having adjacently stacked contact surfaces that slide relatively to each other while being guided along the forward direction. This may involve one or more planar bearings, with or without lubricants. In another or further embodiment, the translation mechanism comprises a translation stage, or an arrangement of cylindrical or spherical roller bearings, designed to constrain all degrees of freedom except for the translation along the longitudinal direction DX. In other or further embodiments, the translation mechanism 3 comprises a parallelogram mechanism arranged for proving a translation along the longitudinal direction DX. In other or further embodiments, the translation mechanism comprises a single wheel with a laterally oriented rotation axis and a traction surface arranged for contacting the bottom of a shoe. This can act as a heel support 2.

FIG 3 illustrates a top view of the assembly 10. In one embodiment, e.g. as shown, the platform 4 has a shape, with respective legs extending forward in the longitudinal direction, e.g. U-shape. Preferably, at least one foot pedal 1 is disposed in at least one of the legs of the U-shape. It can also be envisaged that the platform 4 accommodates more than one foot operable assembly 10, for instance one on each side of the U-shape, whereas the two foot operable assemblies 10 are operated by a left and right foot of a user.

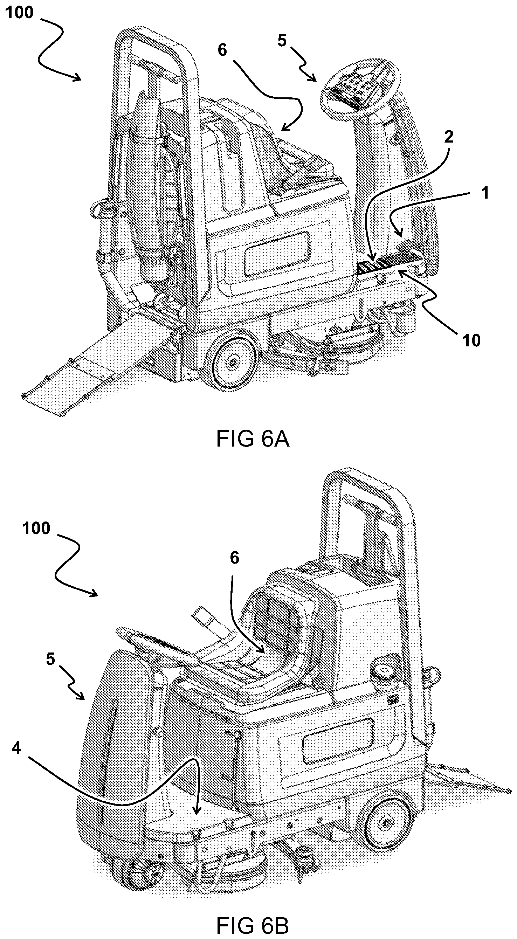

In some embodiments, a base of the U-shape has a depth X56 in the longitudinal direction of at least twenty centimeters, preferably between twenty and thirty centimeters, or up to thirty five centimeters, or more. For example, a maximum depth X56 may be desirable to limit the extension of the vehicle in forward direction, so as to keep the vehicle compact, e.g. when designed for indoor use. In some embodiments, as will be illustrated in FIGs 6A and 6B, the base of the U-shape of the platform 4 can be used in a vehicle, as a clearance path for a driver's legs while taking a seat on the vehicle.

Typically, a gap between the legs of the U-shape has a width Y5 in lateral direction (perpendicular to the longitudinal direction DX and downward direction DZ) less than forty centimeters, for instance, thirty five centimeters, or between thirty five and twenty five centimeters or less, e.g. down to ten centimeters. The gap, as will be further illustrated with reference to FIGs 6A and 6B below, can e.g. be used to accommodate a steering column of a vehicle. The steering column may be arranged between the driver's legs, while the driver operates the vehicle by using the foot operable assembly 10 with the right and/or left leg. The driver's legs are preferably placed in an ergonomic posture, whereas the gap between the legs is preferably less than forty centimeters.

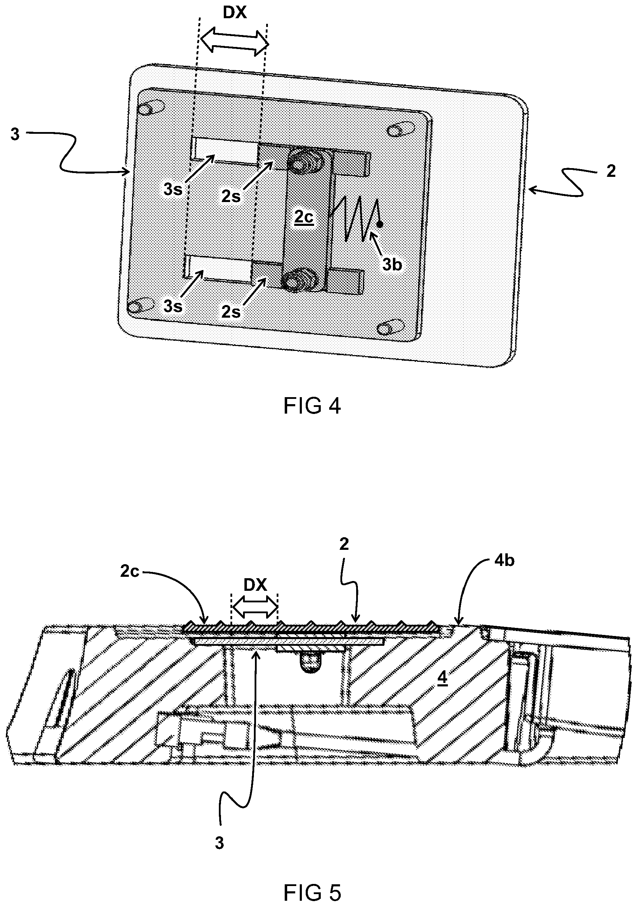

FIG 4 illustrates a detailed view of a slide mechanism 3. In a preferred embodiment, the translation mechanism 3 is arranged for providing a linear translation of the heel support 2 relative to the platform 4. For example, the translation mechanism 3 comprises a one degree-of-freedom (1-DOF) mechanism, allowing the heel support 2 to linearly translate along the forward direction relative to the platform 4. Accordingly, translations in other directions, as well as all rotations of the heel support 2 relative to the platform 4, may be constrained by the translation mechanism 3.

In some embodiments, the translation mechanism 3 comprises one part having one or multiple guiding slots 3s or keyways, and the heel support 2 may comprise one or multiple protrusions 2s matching the guiding slots 3s or keyways, forming a linear translation guide. In one embodiment, the protrusions 2s are integrally formed with the heel support 2, or separately assembled parts. When assembled, the protrusions 2s can, e.g., be interconnected by means of a locking plate 2c or comprise a flange to constrain a movement in an upward direction of the heel support 2 relative to the translation mechanism 3.

In some embodiments, the translation mechanism 3 comprises a biasing element 3b. For example, the biasing element 3b is arranged for preloading the heel support 2 towards the foot pedal 1, e.g. by exerting a force between the translation mechanism 3 and the heel support 2. Preferably, the biasing element 3b has a relatively low resilience, e.g. compared to a biasing of the pedal, e.g. having lower spring constant by at least ten percent (<0.9), twenty percent (<0.8), or even fifty percent (less than half). In principle, the biasing element 3b only needs to overcome any friction of the translation mechanism 3 absent user interaction. The biasing element 3b may also be omitted from the translation mechanism 3, e.g. wherein a user can move the heel support 2 to a neutral position.

In some embodiments, the translation mechanism 3 comprises a pair of sliding parts. For example, the translation mechanism 3 comprises a first part connected to the heel support 2 and a second part connected to the platform 4, whereas the first part and the second part slide over a common contact surface. Preferably, the pair of sliding part comprise materials having a static coefficient of friction lower than 0.3. For example, a first sliding part may e.g. be made of Teflon while a second sliding part may be made of steel. Most preferably, the coefficient of friction is lower than 0.2, e.g. between 0.05 and 0.1.

In some embodiments, the translation mechanism 3 comprises a sensor (not shown), arranged for detecting and/or measuring a translation of the heel support 2 relative to the platform 4. For example, the sensor may be used as an additional safety feature, to distinguish between an intentional and unintentional actuation of the foot pedal 1. In normal use conditions when the user's foot is properly placed on the foot operable assembly 10, an actuation of the foot pedal 1 causes an expected translation of the heel support 2. The sensor may be arranged to detect and/or measure this expected translation, to verify that the user's foot has been properly placed. The output of the sensor may for instance be required to activate the foot operable assembly 10, i.e. a translation mechanism comprising a sensor may be used as an operator presence switch. Alternatively, or additionally, the output of the sensor may be used to activate an indicator light or alarm to alert the user, e.g. of a defective component or potentially incorrect operation of the foot operable assembly 10.

In some embodiments, the foot pedal 1 is coupled to the translation mechanism 3 by means of a mechanical transmission. For example, the ratio between the downward movement of the foot pedal 1 and the forward movement of the heel support 2 can e.g. be constant. Therefore, these movements may be coupled by means of a mechanism other than by the friction forces between the user's foot and the foot operable assembly 10. In one embodiment, the mechanical transmission comprises a gear, lever or push/pull rod transmission, or any other type of mechanical transmission suitable for converting a movement of the foot pedal 1 in the downward direction DZ to a movement of the heel support 2 in the longitudinal direction, and vice versa.

FIG 5 illustrates a section view of a slide mechanism 3. In a preferred embodiment, e.g. as shown, the top surface 2c of the heel support 2 is flush with the top surface 4b of the back section of the platform 4. For example, the height of the top surface 2c of the heel support 2 above the platform 4 may be less than half a centimeter, or between one and two millimeters (mm), or between zero and one millimeter (mm).

FIG 6A and 6B illustrate a vehicle 100 comprising the foot operable assembly 10. For example, the assembly 10 as described herein is used for operating the vehicle 100. For example, the vehicle 100 may be an indoor or outdoor vehicle preferably a ride-on cleaning machine, e.g. scrubber-dryer as shown in Figure 6A and 6B or any other cleaning machine such as a sweeper, or another type of vehicle, e.g. a ride-on lawn mower, or a mobility scooter. For example, the foot operable assembly 10 may be used as a speed or brake pedal, for controlling the speed of the vehicle 100. Alternatively, the foot operable assembly 10 may e.g. be used as a means to control the operation of a one or multiple other purposes of the vehicle. For example, to control the speed or scrubbing pressure of a cleaning disc of a scrubber-dryer, and/or the amount of cleaning agent used. Or e.g. to control the cutting speed or depth of a lawn mower.

In some embodiments, the vehicle 100 comprises a steering column 5 and/or seat 6. As shown in the figures, a vehicle 100, such as a scrubber-dryer may have limited space available between the steering column 5 and the seat 6 due to its compact design. The design of the foot operable assembly 10, comprising a depressible front foot pedal 1 and a translatable heel support 2 mounted behind the front foot pedal 1, allows it to advantageously be placed laterally adjacent a side of the steering column 5 without adding any obstructions in a clearance path on the platform 4 between the seat 6 and steering column 5. This ensures that a user can easily board the vehicle 100, without the risk of tripping or damaging the foot operable assembly 10.

In a preferred embodiment, a vehicle 100, such as a ride-on scrubber-dryer, comprises the foot operable assembly 10 as described herein. Typically, the vehicle 100 has a seat 6 for seating a user, e.g. driver, of the vehicle and a steering column 5 in front of the seat for allowing the (seated) driver to steer the vehicle. For example, the seat 6 and steering column 5 are separated by a path P there between for the driver to board the vehicle 100. Most preferably the front pedal 1 is arranged laterally adjacent the steering column 5, clear of the path P. In this way, the driver does not trip over the pedal when boarding the vehicle. As described herein, the pedal is configured for the seated driver to operate the vehicle 100 by a front of their foot. In some embodiments, the translatable heel support 2 is arranged in the path P for boarding the vehicle 100, longitudinally behind the pedal 1 for supporting a back of the driver's foot. For example, the heel support can be substantially flush with the rest of the platform and configured to only translate in a direction transverse to the boarding. So the user can board the vehicle without tripping over the heel support.

## Claims

1. A foot operable assembly (10) comprising
a depressible front foot pedal (1); and
a translatable heel support (2) mounted longitudinally behind the front foot pedal (1) for supporting a heel of a foot while operating the front foot pedal (1) by a front of the foot, **characterized in that** the heel support (2) is configured to translate for accommodating a changing position of the supported heel during said operating.

2. The assembly according to the preceding claim, comprising a platform (4) with a front section having a top surface (4f) arranged for mounting the front foot pedal (1), and a back section having a horizontal top surface (4b) arranged for mounting the heel support (2), wherein the top surface (4f) of the front section has a declining slope, at least in a forward direction, relative to the horizontal top surface (4b) of the back section.

3. The assembly according to the preceding claim, wherein a top surface (2c) of the heel support (2) spans a horizontal plane (H) parallel to the horizontal top surface (4b) of the platform back section, wherein a top surface (1c) of the front foot pedal (1) extends with a height (Z12d) less than one centimeter above the horizontal plane (H) in pressed down position (Pd) of the front foot pedal (1).

4. The assembly according to any of the preceding claims, comprising a translation mechanism (3) configured to allow moving the heel support (2) along a longitudinal direction (DX) for accommodating the changing heel position, while the foot pedal (1) is pressed down along a downward direction (DZ).

5. The assembly according to the preceding claim, wherein the translation mechanism (3) comprises a sliding mechanism with a set of sliding parts, wherein a first part of the sliding mechanism is connected to the heel support (2) and a second part of the sliding mechanism is connected to the platform (4).

6. The assembly according to any of the preceding claims, wherein the heel support (2) is configured to slide for accommodating the changing heel position, during said operating the front foot pedal (1), over a distance (X12b - X12f) along a longitudinal direction (DX) between a forward position (Pf) and a backward position (Pb) relative to the front foot pedal (1), wherein the distance (X12b - X12f) is between one and five centimeters.

7. The assembly according to any of the preceding claims, wherein the heel support (2) is arranged for sliding from a forward position (Pf) to a backward position (Pb) as the front foot pedal (1) is pressed from a fully upward position (Pu) to a pressed down position (Pd).

8. The assembly according to any of the preceding claims, wherein the front foot pedal (1) has a longitudinal length (X1) between three and ten centimeters, the heel support (2) has a longitudinal length (X2) between six and twenty centimeters, and a distance (X12f) between the front foot pedal (1) and the heel support (2), in a forward position (Pf), is less than twenty centimeters.

9. The assembly according to any of the preceding claims, wherein a downward direction (DZ) in which the front foot pedal (1) is operable is substantially perpendicular to a longitudinal direction (DX) in which the heel support (2) can translate.

10. The assembly according to any of the preceding claims, wherein the pedal (1) is mounted on a push shaft (1p) tilted at an angle (A1) towards the heel support (2).

11. The assembly according to any of the preceding claims, wherein a top surface (1c) of the front foot pedal (1) is cylindrical while a top surface (2c) of the heel support (2) is flat, wherein the top surfaces (1c,2c) of the pedal (1) and heel support (2) each comprise an anti-slip profile for keeping a front and back of the foot stationary with respect to the respective top surfaces.

12. The assembly according to any of the preceding claims, wherein the translation mechanism (3) comprises a sensor, arranged for determining a translation of the heel support (2).

13. The assembly according to any of the preceding claims, wherein the front foot pedal (1) comprises a first biasing element, arranged for preloading the front foot pedal (1) in an upward direction, and the translation mechanism (3) comprises a second biasing element (3b), arranged for preloading the heel support (2) in a forward position (Pf) towards the front foot pedal (1), wherein the first biasing element has a greater resilience than the second biasing element.

14. A vehicle (100) such as a ride-on cleaning machine, e.g. scrubber-dryer, the vehicle comprising
the foot operable assembly (10) according to any of the preceding claims;
a seat (6) for seating a driver of the vehicle (100);
a steering column (5) in front of the seat (6) for allowing the driver to steer the vehicle while seated;
wherein the seat (6) and steering column (5) are separated by a path (P) over a platform (4) there between for the driver to board the vehicle (100);
wherein the front foot pedal (1) is arranged laterally adjacent the steering column (5), clear of the path (P), and configured for the seated driver to operate the vehicle (100) by a front of their foot,
wherein the translatable heel support (2) is arranged in the path (P) for boarding the vehicle (100), longitudinally behind the pedal (1) for supporting a back of the driver's foot.

15. Use of the assembly (10) or vehicle (100) according to any of the preceding claims, the use comprising pressing the front foot pedal (1) with a front of a foot while a heel of the foot is supported by the heel support (2) translating backward or forward.

## Patentansprüche

1. Fußbetätigbare Baugruppe (10) umfassend
ein niederdrückbares Frontfußpedal (1); und
eine verschiebbare Fersenstütze (2), die in Längsrichtung hinter dem Frontfußpedal (1) zum Stützen einer Fußferse während der Betätigung des Frontfußpedals (1) durch einen vorderen Fußabschnitt montiert ist, **dadurch gekennzeichnet, dass** die Fersenstütze (2) dazu konfiguriert ist, sich zu verschieben, um eine wechselnde Position der gestützten Ferse während der Betätigung aufzunehmen.

2. Baugruppe nach dem vorstehenden Anspruch, umfassend eine Plattform (4) mit einem vorderen Abschnitt, der eine Oberseite (4f) aufweist, die zum Montieren des Frontfußpedals (1) angeordnet ist, und einem hinteren Abschnitt, der eine horizontale Oberseite (4b) aufweist, die zum Montieren der Fersenstütze (2) angeordnet ist, wobei die Oberseite (4f) des vorderen Abschnitts eine abfallende Neigung aufweist, zumindest in einer Vorwärtsrichtung, relativ zu der horizontalen oberen Fläche (4b) des hinteren Abschnitts.

3. Baugruppe nach dem vorstehenden Anspruch, wobei eine Oberseite (2c) der Fersenstütze (2) eine horizontale Ebene (H) parallel zu der horizontalen oberen Fläche (4b) des hinteren Plattformabschnitts überspannt, wobei sich eine Oberseite (1c) des Frontfußpedals (1) mit einer Höhe (Z12d) von weniger als einem Zentimeter über die horizontale Ebene (H) in der niedergedrückten Position (Pd) des Frontfußpedals (1) erstreckt.

4. Baugruppe nach einem der vorstehenden Ansprüche, umfassend einen Verschiebemechanismus (3), der dazu konfiguriert ist, die Bewegung der Fersenstütze (2) entlang einer Längsrichtung (DX) zu ermöglichen, um die sich ändernde Fersenposition aufzunehmen, während das Fußpedal (1) entlang einer Abwärtsrichtung (DZ) nach unten gedrückt wird.

5. Baugruppe nach dem vorstehenden Anspruch, wobei der Verschiebemechanismus (3) einen Gleitmechanismus mit einem Satz von Gleitteilen umfasst, wobei ein erster Teil des Gleitmechanismus mit der Fersenstütze (2) verbunden ist und ein zweiter Teil des Gleitmechanismus mit der Plattform (4) verbunden ist.

6. Baugruppe nach einem der vorstehenden Ansprüche, wobei die Fersenstütze (2) dazu konfiguriert ist, die sich ändernde Fersenposition während der Betätigung des Frontfußpedals (1) über eine Strecke (X12b - X12f) entlang einer Längsrichtung (DX) zwischen einer Vorwärtsposition (Pf) und einer Rückwärtsposition (Pb) relativ zu dem Frontfußpedal (1) gleitend aufzunehmen, wobei die Strecke (X12b - X12f) zwischen einem und fünf Zentimetern beträgt.

7. Baugruppe nach einem der vorstehenden Ansprüche, wobei die Fersenstütze (2) angeordnet ist, um von einer Vorwärtsposition (Pf) in eine Rückwärtsposition (Pb) zu gleiten, wenn das Frontfußpedal (1) von einer vollständig nach oben gerichteten Position (Pu) in eine heruntergedrückte Position (Pd) gedrückt wird.

8. Baugruppe nach einem der vorstehenden Ansprüche, wobei das Frontfußpedal (1) eine Längslänge (X1) zwischen drei und zehn Zentimetern aufweist, die Fersenstütze (2) eine Längslänge (X2) zwischen sechs und zwanzig Zentimetern aufweist und ein Abstand (X12f) zwischen dem Frontfußpedal (1) und der Fersenstütze (2) in einer Vorwärtsposition (Pf) weniger als zwanzig Zentimeter beträgt.

9. Baugruppe nach einem der vorstehenden Ansprüche, wobei eine Abwärtsrichtung (DZ), in der das Frontfußpedal (1) betreibbar ist, im Wesentlichen senkrecht zu einer Längsrichtung (DX) ist, in der sich die Fersenstütze (2) bewegen kann.

10. Baugruppe nach einem der vorstehenden Ansprüche, bei der das Pedal (1) auf einer Druckwelle (1p) montiert ist, die in einem Winkel (A1) zu der Fersenstütze (2) geneigt ist.

11. Baugruppe nach einem der vorstehenden Ansprüche, wobei eine Oberseite (1c) des Frontfußpedals (1) zylindrisch ist, während eine Oberseite (2c) der Fersenstütze (2) flach ist, wobei die Oberseiten (1c, 2c) des Pedals (1) und der Fersenstütze (2) jeweils ein Anti-Rutsch-Profil umfassen, um einen vorderen und hinteren Teil des Fußes in Bezug auf die jeweiligen Oberseiten stationär zu halten.

12. Baugruppe nach einem der vorstehenden Ansprüche, wobei der Verschiebemechanismus (3) einen Sensor umfasst, der zum Bestimmen einer Verschiebung der Fersenstütze (2) angeordnet ist.

13. Baugruppe nach einem der vorstehenden Ansprüche, wobei das Frontfußpedal (1) ein erstes Vorspannelement umfasst, das zum Vorspannen des Frontfußpedals (1) in einer Aufwärtsrichtung angeordnet ist, und der Verschiebemechanismus (3) ein zweites Vorspannelement (3b) umfasst, das zum Vorspannen der Fersenstütze (2) in einer Vorwärtsposition (Pf) zu dem Frontfußpedal (1) hin angeordnet ist, wobei das erste Vorspannelement eine größere Elastizität als das zweite Vorspannelement aufweist.

14. Fahrzeug (100), wie z. B. eine Aufsitz-Reinigungsmaschine, z.B. eine Scheuersaugmaschine, wobei das Fahrzeug Folgendes umfasst
die fußbetätigbare Baugruppe (10) nach einem der vorstehenden Ansprüche;
einen Sitz (6) zum Hinsetzen eines Fahrers des Fahrzeugs (100);
eine Lenksäule (5) vor dem Sitz (6), die es dem Fahrer ermöglicht, das Fahrzeug im Sitzen zu lenken;
wobei der Sitz (6) und die Lenksäule (5) durch einen Pfad (P) über eine Plattform (4) dazwischen getrennt sind, damit der Fahrer in das Fahrzeug (100) einsteigen kann;
wobei das Frontfußpedal (1) seitlich neben der Lenksäule (5) angeordnet ist, frei von dem Pfad (P), und dazu konfiguriert ist, dass der sitzende Fahrer das Fahrzeug (100) mit einem vorderen Teil seines Fußes bedienen kann,
wobei die verschiebbare Fersenstütze (2) in dem Pfad (P) zum Einsteigen in das Fahrzeug (100) in Längsrichtung hinter dem Pedal (1) angeordnet ist, um einen hinteren Teil des Fußes des Fahrers zu stützen.

15. Anwendung der Baugruppe (10) oder des Fahrzeugs (100) nach einem der vorstehenden Ansprüche, wobei die Anwendung das Drücken des Frontfußpedals (1) mit einem vorderen Fußabschnitt umfasst, während eine Ferse des Fußes durch die sich nach hinten oder vorne verschiebende Fersenstütze (2) gestützt wird.

## Revendications

1. Assemblage actionnable au pied (10), comprenant
une pédale de pied avant pouvant être enfoncée (1) ; et
un support de talon pouvant être déplacé en translation (2) monté longitudinalement derrière la pédale de pied avant (1) pour supporter un talon d'un pied tout en actionnant la pédale de pied avant (1) par l'intermédiaire d'une partie avant du pied, **caractérisé en ce que** le support de talon (2) est configuré pour se déplacer en translation pour s'adapter à une position changeante du talon supporté pendant ledit actionnement.

2. Assemblage selon la revendication précédente, comprenant une plate-forme (4) avec une section avant présentant une surface supérieure (4f) agencée pour monter la pédale de pied avant (1), et une section arrière présentant une surface supérieure horizontale (4b) agencée pour monter le support de talon (2), dans lequel la surface supérieure (4f) de la section avant présente une pente décroissante, au moins dans une direction vers l'avant, par rapport à la surface supérieure horizontale (4b) de la section arrière.

3. Assemblage selon la revendication précédente, dans lequel une surface supérieure (2c) du support de talon (2) s'étend sur un plan horizontal (H) parallèle à la surface supérieure horizontale (4b) de la section arrière de plate-forme, dans lequel une surface supérieure (1c) de la pédale de pied avant (1) s'étend avec une hauteur (Z12d) inférieure à un centimètre au-dessus du plan horizontal (H) dans la position pressée vers le bas (Pd) de la pédale de pied avant (1).

4. Assemblage selon l'une quelconque des revendications précédentes, comprenant un mécanisme de translation (3) configuré pour permettre de déplacer le support de talon (2) le long d'une direction longitudinale (DX) pour s'adapter à la position de talon changeante, tandis que la pédale de pied (1) est pressée vers le bas le long d'une direction descendante (DZ).

5. Assemblage selon la revendication précédente, dans lequel le mécanisme de translation (3) comprend un mécanisme coulissant avec un Assemblage de parties coulissantes, dans lequel une première partie du mécanisme coulissant est reliée au support de talon (2) et une seconde partie du mécanisme coulissant est reliée à la plate-forme (4).

6. Assemblage selon l'une quelconque des revendications précédentes, dans lequel le support de talon (2) est configuré pour coulisser pour s'adapter à la position de talon changeante, pendant ledit actionnement de la pédale de pied avant (1), sur une distance (X12b - X12f) le long d'une direction longitudinale (DX) entre une position avant (Pf) et une position arrière (Pb) par rapport à la pédale de pied avant (1), dans lequel la distance (X12b - X12f) est comprise entre un et cinq centimètres.

7. Assemblage selon l'une quelconque des revendications précédentes, dans lequel le support de talon (2) est agencé pour coulisser d'une position avant (Pf) à une position arrière (Pb) lorsque la pédale de pied avant (1) est pressée d'une position complètement vers le haut (Pu) à une position pressée vers le bas (Pd).

8. Assemblage selon l'une quelconque des revendications précédentes, dans lequel la pédale de pied avant (1) présente une longueur longitudinale (X1) comprise entre trois et dix centimètres, le support de talon (2) présente une longueur longitudinale (X2) comprise entre six et vingt centimètres, et une distance (X12f) entre la pédale de pied avant (1) et le support de talon (2), dans une position avant (Pf), est inférieure à vingt centimètres.

9. Assemblage selon l'une quelconque des revendications précédentes, dans lequel une direction vers le bas (DZ) dans laquelle la pédale de pied avant (1) peut être actionnée est sensiblement perpendiculaire à une direction longitudinale (DX) dans laquelle le support de talon (2) peut se déplacer en translation.

10. Assemblage selon l'une quelconque des revendications précédentes, dans lequel la pédale de pied (1) est montée sur un arbre de poussée (1p) incliné selon un angle (A1) vers le support de talon (2).

11. Assemblage selon l'une quelconque des revendications précédentes, dans lequel une surface supérieure (1c) de la pédale de pied avant (1) est cylindrique tandis qu'une surface supérieure (2c) du support de talon (2) est plate, dans lequel les surfaces supérieures (1c, 2c) de la pédale (1) et du support de talon (2) comprennent chacune un profil antidérapant pour maintenir l'avant et l'arrière du pied fixes par rapport aux surfaces supérieures respectives.

12. Assemblage selon l'une quelconque des revendications précédentes, dans lequel le mécanisme de translation (3) comprend un capteur, agencé pour déterminer une translation du support de talon (2).

13. Assemblage selon l'une quelconque des revendications précédentes, dans lequel la pédale de pied avant (1) comprend un premier élément de sollicitation, agencé pour précharger la pédale de pied avant (1) dans une direction vers le haut, et le mécanisme de translation (3) comprend un second élément de sollicitation (3b), agencé pour précharger le support de talon (2) dans une position avant (Pf) vers la pédale de pied avant (1), dans lequel le premier élément de sollicitation présente une plus grande élasticité que le second élément de sollicitation.

14. Véhicule (100) tel qu'une machine de nettoyage autoportée, par exemple une autolaveuse-sécheuse, le véhicule comprenant
l'Assemblage actionnable au pied (10) selon l'une quelconque des revendications précédentes ;
un siège (6) pour asseoir un conducteur du véhicule (100) ;
une colonne de direction (5) devant le siège (6) pour permettre au conducteur de diriger le véhicule alors qu'il est assis ;
dans lequel le siège (6) et la colonne de direction (5) sont séparés par un trajet (P) au-dessus d'une plate-forme (4) entre eux pour que le conducteur monte à bord du véhicule (100) ;
dans lequel la pédale de pied avant (1) est agencée latéralement adjacente à la colonne de direction (5), dégagée de la trajectoire (P), et configurée pour que le conducteur assis conduise le véhicule (100) par l'avant de son pied,
dans lequel le support de talon pouvant être déplacé en translation (2) est agencé dans la trajectoire (P) pour monter à bord du véhicule (100), longitudinalement derrière la pédale de pied (1) pour supporter l'arrière du pied du conducteur.

15. Utilisation de l'Assemblage (10) ou du véhicule (100) selon l'une quelconque des revendications précédentes, l'utilisation comprenant la pression de la pédale de pied avant (1) avec l'avant d'un pied tandis qu'un talon du pied est supporté par le support de talon (2) se déplaçant en translation vers l'arrière ou vers l'avant.
